# FASCICULE DE BREVET EUROPEEN

(11) **EP 3 796 103 B1**
(45) Date de publication et mention de la délivrance du brevet: **18.06.2025**
(21) Numéro de dépôt: 19198752.8
(22) Date de dépôt: 20.09.2019
(51) Int. Cl.: G04B 19/06, G04B 45/00, G02B 6/00

(54) **ARTICLE DECORATIF AVEC EFFET LUMINEUX**
DEKORARTIKEL MIT LEUCHTEFFEKT
DECORATIVE ITEM WITH LIGHT EFFECT

(43) Date de publication de la demande: 24.03.2021
(73) Titulaire: The Swatch Group Research and Development Ltd, 2074 Marin (CH)
(72) Inventeur: REINAUER, Olga, 2000 Neuchâtel (CH); MARLOT DOERR, Agnès, 2000 Neuchâtel (CH); FRANÇOIS, Nicolas, 2000 Neuchâtel (CH); TORTORA, Pierpasquale, 2000 Neuchâtel (CH); BOURBAN, Stewes, 1589 Chabrey (CH)
(74) Mandataire: ICB SA

(56) Documents cités:
- EP-A1- 1 626 316
- EP-A1- 1 717 102
- EP-A1- 2 717 104
- EP-A1- 3 070 539
- WO-A1-97/19293
- CH-A2- 701 301
- CH-A2- 704 684
- CH-A2- 706 262
- CH-A2- 708 563
- US-A- 4 274 154
- US-B1- 10 175 653

## Description

### DOMAINE TECHNIQUE

La présente invention se rapporte à un article décoratif, notamment à un composant d'habillage en horlogerie ou bijouterie présentant un effet lumineux. Elle se rapporte également au procédé de fabrication de l'article décoratif.

### ART ANTERIEUR

Il existe de nombreux articles pour lesquels un aspect esthétique particulier est recherché. On peut notamment citer les articles dans le domaine horloger toujours en quête d'amélioration esthétique. L'amélioration esthétique peut être apportée par plusieurs éléments, que ce soit la couleur, le graphisme ou encore un effet lumineux via, par exemple, un revêtement luminescent. Un effet lumineux peut également être apporté via une source de lumière rapportée au sein de la pièce d'horlogerie et destinée à éclairer le cadran, un index ou encore une aiguille comme dans le document EP 2 950 167.

Le document CH 701301 A2 décrit une pièce d'horlogerie comprenant au moins une source de lumière logée dans son volume intérieur et produisant une lumière qui passe à travers la partie transparente ou translucide d'un élément d'habillage.

La présente invention vise à apporter un nouvel effet lumineux à un article décoratif et en particulier à un composant d'habillage en horlogerie ou en bijouterie.

### RESUME DE L'INVENTION

La présente invention a ainsi pour objet de proposer un article décoratif comprenant une ou plusieurs fibres optiques enrobées dans un matériau à base métallique, céramique ou polymérique et destinées à guider la lumière issue d'une ou plusieurs sources de lumière vers une face visible de l'article décoratif de manière à créer un effet lumineux.

D'autres caractéristiques et avantages de la présente invention apparaîtront dans la description suivante d'un mode de réalisation préféré, présenté à titre d'exemple non limitatif en référence aux dessins annexés.

### BREVE DESCRIPTION DES FIGURES

Les figures 1a-1e représentent schématiquement différentes variantes de l'agencement des sources lumineuses et des fibres optiques au sein de l'article décoratif selon l'invention.
La figure 2 représente schématiquement les effets lumineux qui peuvent être obtenus avec la variante de la figure 1e.
Les figures 3a et 3b représentent schématiquement une coupe d'une pièce d'horlogerie selon l'invention comprenant un cadran dans lequel sont noyées les fibres optiques pour respectivement deux arrangements distincts de la source lumineuse.
La figure 4 illustre schématiquement les étapes du procédé de fabrication de l'article décoratif présentant un effet lumineux selon l'invention.

### DESCRIPTION DETAILLEE

La présente invention se rapporte à un article présentant un effet lumineux à des fins décoratives. L'article décoratif peut être un élément constitutif de montres, bijoux, bracelets, broches, colliers, sacs à main, etc. Dans le domaine horloger, cet article est un composant d'habillage tel qu'une carrure, un fond, une lunette, un poussoir, un maillon de bracelet, un cadran, une aiguille, un index de cadran, etc.

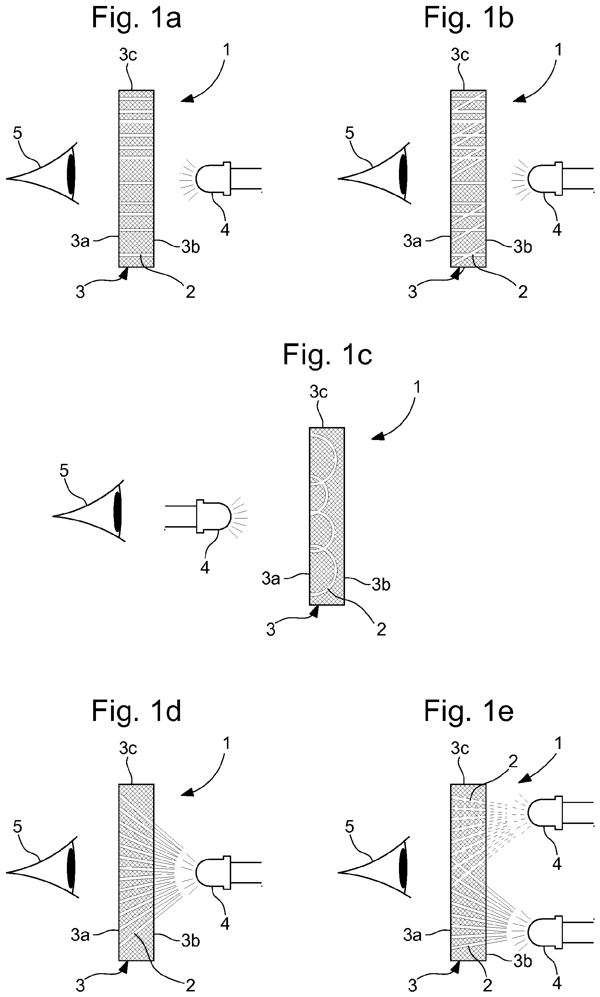

Selon l'invention et tel que schématisé aux figures 1a à 1e, l'article décoratif 1 comporte un élément 3 réalisé dans un matériau à base polymérique, céramique ou métallique au sein duquel une ou plusieurs fibres optiques 2 sont disposées. Par simplicité, on parlera ci-après de fibres optiques au pluriel. L'article décoratif 1 comporte également au moins une source lumineuse 4 extérieure ou intérieure à l'élément 3. Les fibres optiques 2 débouchent sur au moins une face visible 3a, c.à.d une face dirigée vers l'observateur 5, de l'élément 3. Il n'est cependant pas exclu qu'une extrémité des fibres débouche à proximité de la face visible si l'élément comporte une surface réalisée dans un matériau transparent. On entend par proximité une distance inférieure ou égale à 2 mm sous la face visible. Les fibres optiques peuvent être soit des fibres optiques standards, soit des fibres optiques fluorescentes qui produisent une couleur lors de l'illumination. Les fibres servent de guides d'onde à la lumière émise par la ou les sources de lumière 4. La source de lumière est un élément qui émet des photons grâce aux phénomènes de photoluminescence, électroluminescence ou chimiluminescences. Il peut ainsi s'agir de diodes électroluminescentes (LED's), sources fluorescentes, etc. Les fibres optiques 2 peuvent être directement connectées à la source de lumière 4 comme illustré aux figures 1d et 1e ou exposées à la source de lumière 4 sans connection directe comme illustré aux figures 1a-1c. Selon une variante non représentée, la lumière peut également être acheminée depuis la source vers les fibres via un guide d'onde, par exemple, ménagé dans l'élément.

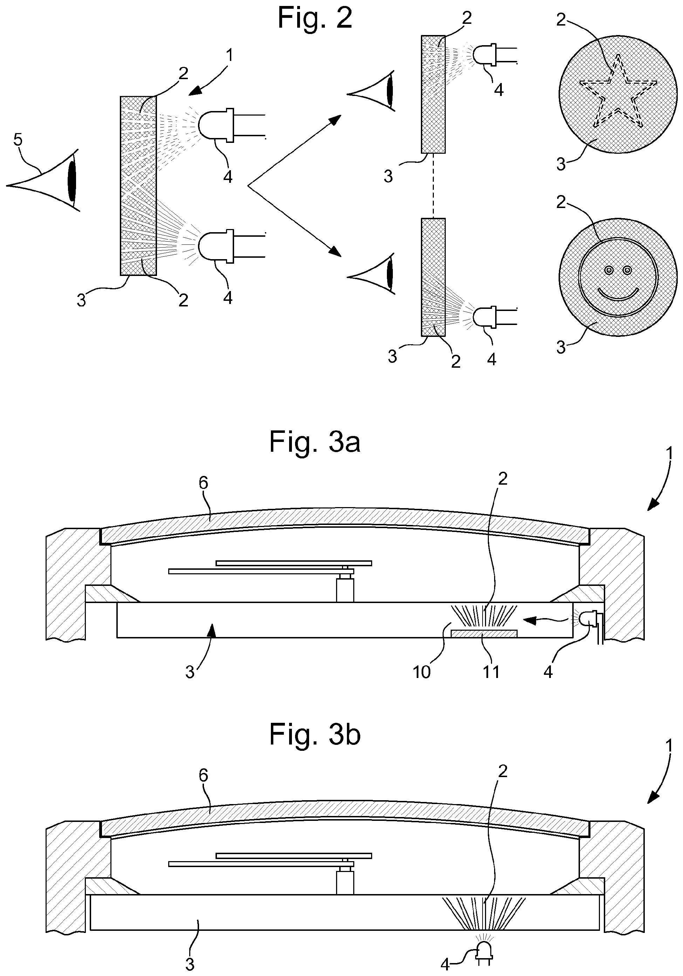

Au sein du matériau de l'élément 3, les fibres optiques 2 peuvent être traversantes depuis une première face 3b vers une deuxième face qui est la face visible 3a de l'élément 3 comme représenté schématiquement aux figures 1a-b et 1d-e, les première et deuxième faces pouvant être opposées (configuration représentée) ou jointives (configuration non représentée). Lorsque les fibres 2 sont traversantes, la source de lumière 4 est disposée du côté de la première face 3b ou 3c de l'élément. En variante, les deux extrémités des fibres 2 peuvent déboucher sur la face visible 3a comme représenté à la figure 1c. Auquel cas, la source de lumière 4 est du côté de la face visible 3a. Les fibres optiques débouchent sur la face visible en formant un ensemble de points lumineux qui en fonction de l'arrangement des fibres peuvent dessiner une forme ou un logo donné, par exemple une étoile ou un smiley dans les exemples de la figure 2. On qualifiera plus généralement cette forme ou logo de décor.

Les fibres optiques sont noyées dans le matériau et peuvent adopter différentes orientations au sein de ce matériau. Selon la variante de la figure 1a, elles sont toutes orientées dans une même direction sensiblement perpendiculaire à la face visible 3a de l'élément. Dans l'exemple illustré, elles sont orientées parallèlement à l'axe entre la source de lumière 4 et l'observateur 5. A la figure 1b, elles sont orientées chacune différemment avec un angle inférieur à 90° par rapport à cet axe ce qui permet de créer un effet esthétique variable selon l'angle de vue. En variante à la figure 1c, les fibres 2 sont pliées avec les deux extrémités débouchant sur la face visible 3a. Dans les configurations des figures 1d et 1e, les fibres 2 sont traversantes avec une ou plusieurs sources de lumière 4 connectées aux fibres 2. A la figure 1d, l'ensemble des fibres 2 est connecté à une source de lumière 4. A la figure 1e, une partie des fibres 2 est connectée à une source de lumière 4 et la partie restante des fibres 2 est connectée à une autre source de lumière 4. Ainsi, avec plusieurs sources de lumière connectées aux fibres optiques des images de couleurs différentes peuvent être générées. Aussi, avec un fonctionnement alternatif des sources de lumière, des images successives peuvent apparaître comme schématisé à la figure 2.

Par exemple, l'élément 3 peut être un cadran avec les fibres optiques 2 figées dans le matériau du cadran de manière à former un dessin. Les sources de lumière telles que des LED's, connectées aux fibres optiques figées dans le matériau, sont placées sous le cadran. Lorsque les LED's s'allument de manière alternative, des images différentes sont visibles à l'observateur. De même, une animation peut être créée sur le cadran. A titre d'exemple, les figures 3a et 3b représentent différents agencements de la source de lumière 4 sous le cadran 3 dans lequel sont noyées les fibres optiques 2. A la figure 3a, la source de lumière 4 est disposée en regard d'une face latérale du cadran 3. La lumière est transmise depuis la source 4 vers les fibres 2 via un guide d'onde 10 ménagé dans le cadran 3. Le guide d'onde 10 peut être muni sur sa face inférieure en regard des fibres optiques 2 d'un réflecteur 11 pour réfléchir la lumière vers les fibres. A la figure 3b, la source de lumière 4 est disposée sous le cadran 3 et en particulier sur le pourtour du cadran. Elle est directement connectée aux fibres optiques 2. Dans les exemples, une seule source de lumière est représentée. Selon des variantes, il est envisageable de placer 2, 3, 4, 5, etc. sources de lumière. Selon l'invention, les sources de lumière sont connectées à une source d'alimentation telle qu'une pile disposée au sein de l'article décoratif avec un organe de commande par exemple manuel disposé à l'extérieur de l'article décoratif.

Dans les exemples illustrés, la source de lumière est extérieure à l'élément. Il est cependant également envisageable de positionner la source de lumière au sein de l'élément. Dans ce cas, il n'est pas nécessaire de faire déboucher les deux extrémités de la fibre sur une face extérieure de l'élément. Il est, par exemple, envisageable de surmouler la source de lumière au sein de l'élément. A titre illustratif, dans le domaine horloger, la source de lumière peut être surmoulée au sein du composant d'habillage, par exemple un maillon de bracelet, comprenant les fibres. Il est également envisageable tel que décrit dans le document EP 2 950 167 d'intégrer la source de lumière au sein d'un logement ménagé dans une aiguille formant l'élément dans lequel sont noyées les fibres optiques.

Préférentiellement, les fibres optiques sont noyées au sein d'une matrice polymère. A titre d'exemple, le polymère peut être choisi parmi les résines époxy, acrylique, phénolique, esther, polyuréthane, etc. La matrice polymère comprend éventuellement des charges permettant de modifier les propriétés mécaniques du matériau, la couleur, la densité du matériau, de rendre le matériau luminescent et/ou d'opacifier le polymère le cas échéant. Ces charges sont entre autres, inorganiques telles que des poudres métalliques, céramiques, introduites entre 20% et 90% en masse, elles visent à augmenter la densité de la matière et à changer sa conductivité thermique ; les fibres de verres introduites entre 10% et 50% en masse afin d'augmenter la stabilité dimensionnelle de la matière ou des charges organiques comme des fibres végétales (cellulose, lin, chanvre,...) ou des fibres animales (cuir, laine...) introduites entre 5% et 50% en masse elles permettent de donner à la matière une apparence naturelle et rendent possible la revalorisation de déchets de production de matières naturelles . On cite également les pigments photoluminescents introduits entre 10% et 90% en masse (par exemple les aluminates de strontium dopés aux lanthanides) dans la résine afin de bénéficier d'une luminescence dans le noir après avoir chargé la matière à la lumière. La matrice polymère peut donc comprendre l'une ou l'autre des charges seules ou en combinaison dès lors que le pourcentage en masse de ou des charges n'excède pas 90% en masse de la matrice polymère. De préférence la matrice polymère comprendra au moins la charge inorganique.

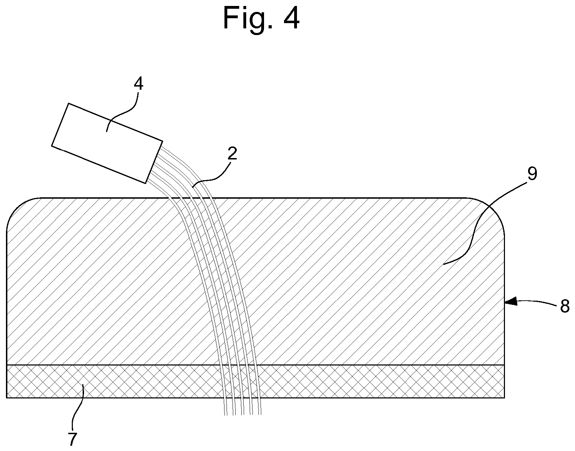

Pour réaliser le matériau, les fibres optiques sont intégrées dans le mélange comprenant le liant organique, c.à.d. la résine susmentionnée, et les charges éventuelles. Dans un exemple d'application illustré à la figure 4, le matériau est réalisé par coulée sous vide dans un moule 8 ayant la forme de l'élément. Dans une étape a), une résine 7 à prise rapide, qu'on peut qualifier de colle, est coulée dans le fond du moule 8. Cette résine peut, par exemple, être une résine époxy qui sera ensuite éliminée lors de l'usinage et du polissage de la pièce. Cette couche de colle qui, à titre d'exemple, a une épaisseur de l'ordre du millimètre forme une zone sacrificielle permettant de positionner les fibres optiques. Après retrait de la zone sacrificielle, la surface à nu formera la face destinée à être visible avec l'effet lumineux. De manière alternative, à la place de la résine sacrificielle, une plaque avec une matrice de micro-trous qui permettent de positionner les fibres et qui composent un décor est disposée. Le pattern va apparaître illuminé lorsqu'on allume la source de lumière. La plaque peut être sacrificielle ou être maintenue dans le matériau. Dans une étape b), les fibres optiques 2 sont positionnées dans le fond du moule pour réaliser le motif souhaité. La résine 7 dans laquelle la base des fibres 2 est noyée est polymérisée. Dans une étape c), les fibres sont découpées à la taille souhaitée de manière à déboucher sur ou à proximité de la face visible sur l'élément fini. Lorsque les fibres sont destinées à être connectées directement à des sources de lumière. Elles sont, lors de cette étape, tordues et collées ensemble pour former un ou plusieurs torons respectivement connectés à une ou plusieurs sources de lumière 4. Dans une étape d), la résine 9 formant la matrice polymère du matériau est coulée avec les charges souhaitées dans l'empreinte du moule pour surmouler les fibres optiques. Dans l'étape e), la résine est réticulée et l'ensemble est démoulé après le temps de cuisson. Dans l'étape f), la couche de résine sacrificielle 7 ou la plaque le cas échéant est éliminée par usinage.

On notera qu'alternativement, les fibres optiques peuvent être noyées au sein d'une matrice métallique amorphe ou cristalline via un procédé d'injection sur les fibres positionnées dans le moule, d'un feedstock comprenant une poudre métallique et un système de liant organique (paraffine, polyéthylène, etc.). Après injection, le feedstock est délianté par dégradation thermique ou par dissolution dans un solvant avant d'être fritté. Les fibres sont alors réalisées dans un matériau tel que le quartz résistant aux températures de frittage du métal.

Les fibres optiques peuvent également être noyées au sein d'une matrice céramique à base de nitrures, oxydes et/ou carbures. Les poudres céramiques éventuellement mélangées à un système de liant organique (paraffine, polyéthylène, etc.) sont injectées ou pressées dans le moule comprenant les fibres avant d'être frittées. Les fibres sont alors également réalisées dans un matériau résistant aux températures de frittage de la céramique.

### Légende

(1) Article décoratif
(2) Fibre optique
(3) Elément ou cadran
   a. Face visible
   b. Face opposée à la face visible
   c. Face jointive avec la face visible
(4) Source de lumière
(5) Observateur
(6) Glace
(7) Support, aussi appelé résine sacrificielle
(8) Moule
(9) Matériau ou résine
(10) Guide d'onde
(11) Réflecteur

## Revendications

1. Article décoratif (1) comprenant :
- un élément (3) réalisé au moins en partie dans un matériau à base métallique, polymérique ou céramique et comportant une face visible (3a) pour un observateur (5),
- au moins une source de lumière (4) extérieure ou intérieure audit élément (3),
ledit article décoratif (1) comportant en outre au moins une première pluralité de fibres optiques (2) et une deuxième pluralité de fibres optiques, chacune des première et deuxième pluralités de fibres optiques étant noyée au sein dudit matériau de l'élément (3), lesdites fibres optiques (2) des première et deuxième pluralités de fibres optiques servant de guide à la lumière issue de la source de lumière (4) de manière à réaliser, en utilisation, un effet lumineux sur la face visible (3a) de l'élément (3), les première et deuxième pluralités de fibres optiques présentant respectivement des orientations différentes, et dans lequel chacune des première et deuxième pluralités de fibres optiques produisent respectivement un effet lumineux de forme différente sur la face visible l'élément (3) étant un composant d'habillage horloger choisi parmi la liste comprenant une carrure, un fond, une lunette, un poussoir, un cadran, une aiguille et un index de cadran.

2. Article décoratif (1) selon la revendication 1, **caractérisé en ce qu'**une desdites première ou deuxième pluralité de fibres optiques (2) débouche à une extrémité sur la face visible (3a) ou à proximité de la face visible (3a) de l'élément (3) et à son autre extrémité sur une face (3c) jointive avec la face visible (3a).

3. Article décoratif (1) selon la revendication 1, **caractérisé en ce que** lesdites première et deuxième pluralité de fibres optiques (2) débouchent à une extrémité sur la face visible (3a) ou à proximité de la face visible (3a) de l'élément (3) et à leurs autres extrémités sur une face (3b) opposée à la face visible (3a).

4. Article décoratif (1) selon l'une quelconque des revendications 1 à 3, **caractérisé en ce que** les autres extrémités des première et deuxième pluralités de fibres optiques (2) sont directement connectée à la source de lumière (4).

5. Article décoratif (1) selon l'une quelconque des revendications 1 à 3, **caractérisé en ce que** les autres extrémités des première et deuxième pluralités de fibres optiques (2) sont couplées à la source de lumière (4) via un guide d'onde (10).

6. Article décoratif (1) selon l'une des revendications précédentes, **caractérisé en ce qu'**il comporte au moins deux sources de lumière (4) destinées en utilisation à former sur la face visible (3a) de l'élément (3) respectivement des décors se distinguant par leur forme ou leur couleur associées respectivement aux première et deuxième pluralités de fibres optiques.

7. Article décoratif (1) selon l'une quelconque des revendications précédentes, **caractérisé en ce que** l'élément (3) est un cadran avec la source de lumière (4) disposée sous le cadran.

8. Article décoratif (1) selon l'une quelconque des revendications précédentes, **caractérisé en ce que** l'élément (3) est un cadran avec la source de lumière (4) disposée en regard d'une face latérale du cadran.

9. Procédé de fabrication d'un article décoratif (1) selon l'une des revendications précédentes, procédé comprenant les étapes consistant à :
- Mettre à disposition une première pluralité de fibres optiques (2) et une deuxième pluralité de fibres optiques (2) et un moule (8) ayant sensiblement la forme de l'élément (3),
- Disposer au fond du moule (8) un support (7) permettant de positionner la première pluralité de fibres optiques (2) et la deuxième pluralité de fibres optiques, (2),
- Couler, injecter ou presser sur le support (7) une matière de départ de manière à enrober la première pluralité de fibres optiques (2) et la deuxième pluralité de fibres optiques (2) et obtenir le matériau à base métallique, polymérique ou céramique.
- Démouler le matériau à base métallique, polymérique ou céramique.

10. Procédé de fabrication selon la revendication 9, **caractérisé en ce que** le support (7) est sacrificiel.

11. Procédé de fabrication selon la revendication 10, **caractérisé en ce que** le support (7) est une résine sacrificielle faisant office de colle pour la première pluralité de fibres optiques (2) et la deuxième pluralité de fibres optiques, (2) lors de son positionnement.

12. Procédé de fabrication selon la revendication 9, **caractérisé en ce que** le support (7) est une plaque percée d'un ou plusieurs trous pour le positionnement de la première pluralité de fibres optiques (2) et la deuxième pluralité de fibres optiques (2).

13. Procédé de fabrication selon la revendication 9, **caractérisé en ce que** les fibres optiques sont noyées dans une matrice polymère, ledit polymère étant choisi parmi les résines époxy, acrylique, phénolique, esther et polyuréthane.

14. Procédé de fabrication selon l'une quelconque des revendications 9 à 12, **caractérisé en ce que** la matière de départ est un feedstock métallique ou céramique comprenant un système de liant organique, le matériau étant obtenu par frittage du feedstock après une étape de déliantage.

15. Procédé de fabrication selon l'une quelconque des revendications 9 à 14, **caractérisé en ce que** plusieurs fibres optiques (2) dans chacune desdites pluralités sont mises à disposition, lesdites fibres optiques (2) étant tordues et collées entre elles après l'étape de positionnement des fibres optiques (2) de manière à former un ou plusieurs torons de fibres optiques (2).

16. Procédé de fabrication selon la revendication 15, **caractérisé en ce que**, après l'étape de démoulage, chaque toron de fibres optiques (2) est connecté à une source de lumière (4).

## Patentansprüche

1. Ein dekoratives Teil (1), Folgendes umfassend:
- ein Element (3), das zumindest teilweise aus einem Material auf Metall-, Polymer- oder Keramikbasis besteht und eine für einen Beobachter (5) sichtbare Fläche (3a) aufweist,
- mindestens eine Lichtquelle (4) außerhalb oder innerhalb des besagten Elements (3), wobei das dekorative Teil (1) außerdem mindestens eine erste Vielzahl von Lichtleitfasern (2) und eine zweite Vielzahl von Lichtleitfasern umfasst, wobei jede der ersten und zweiten Vielzahl von Lichtleitfasern in das besagte Material des Elements (3) eingebettet ist, wobei die besagten Lichtleitfasern (2) in der ersten und zweiten Vielzahl von Lichtleitfasern als Leiter für das von der Lichtquelle (4) stammende Licht dienen, um bei der Verwendung einen Leuchteffekt auf der sichtbaren Fläche (3a) des Elements (3) zu erzeugen, wobei die erste und die zweite Mehrzahl von Lichtleitfasern jeweils unterschiedliche Ausrichtungen haben und wobei jede der ersten und der zweiten Mehrzahl von Lichtleitfasern jeweils einen unterschiedlich geformten Leuchteffekt auf der sichtbaren Fläche erzeugt, wobei das Element (3) ein äußeres Uhrenteil ist, das aus der Liste ausgewählt wird, die eine Mitte, eine Rückseite, eine Lünette, einen Knopf, ein Zifferblatt und einen Zifferblattindex umfasst.

2. Dekoratives Teil (1) nach Anspruch 1, **dadurch gekennzeichnet, dass** die besagte erste oder zweite Vielzahl von Lichtleitfasern (2) an einem Ende auf der sichtbaren Fläche (3a) oder in der Nähe der sichtbaren Fläche (3a) des Elements (3) und an ihrem anderen Ende auf einer mit der Sichtfläche (3a) bündigen Fläche (3c) mündet.

3. Dekoratives Teil (1) nach Anspruch 1, **dadurch gekennzeichnet, dass** die besagte erste und zweite Vielzahl von Lichtleitfasern (2) an einem Ende in die Sichtfläche (3a) oder in die Nähe der Sichtfläche (3a) des Elements (3) und an ihren anderen Enden in eine der Sichtfläche (3a) gegenüberliegende Fläche (3b) reichen.

4. Dekoratives Teil (1) nach einem der Ansprüche 1 bis 3, **dadurch gekennzeichnet, dass** die anderen Enden der ersten und zweiten Vielzahl von Lichtleitfasern (2) direkt mit der Lichtquelle (4) verbunden sind.

5. Dekoratives Teil (1) nach einem der Ansprüche 1 bis 3, **dadurch gekennzeichnet, dass** die anderen Enden der ersten und zweiten Vielzahl von Lichtleitfasern (2) über einen Wellenleiter (10) an die Lichtquelle (4) gekoppelt sind.

6. Dekoratives Teil (1) nach einem der vorhergehenden Ansprüche, **dadurch gekennzeichnet, dass** es mindestens zwei Lichtquellen (4) umfasst, die dazu bestimmt sind, bei Gebrauch auf der sichtbaren Fläche (3a) des Elements (3) jeweils Dekorationen zu bilden, die sich in Form oder Farbe voneinander unterscheiden und jeweils der ersten und zweiten Vielzahl von Lichtleitfasern entsprechen.

7. Dekoratives Teil (1) nach einem der vorhergehenden Ansprüche, **dadurch gekennzeichnet, dass** das Element (3) ein Zifferblatt ist, wobei die Lichtquelle (4) unterhalb des Zifferblatts angeordnet ist.

8. Dekoratives Teil (1) nach einem der vorhergehenden Ansprüche, **dadurch gekennzeichnet, dass** das Element (3) ein Zifferblatt ist, wobei die Lichtquelle (4) gegenüber einer Seitenfläche des Zifferblattes angeordnet ist.

9. Verfahren zur Herstellung eines dekorativen Teils (1) nach einem der vorhergehenden Ansprüche, wobei das Verfahren aus folgenden Schritten besteht:
- bereitstellen einer ersten Vielzahl von Lichtleitfasern (2) und einer zweiten Vielzahl von Lichtleitfasern (2) und einer Werkzeugform (8), die im Wesentlichen die Form des Elements (3) aufweist,
- platzieren einer Auflage (7) im Boden der Werkzeugform (8), um die erste Vielzahl von Lichtleitfasern (2) und die zweite Vielzahl von Lichtleitfasern (2) zu positionieren,
- gießen, Einspritzen oder Pressen eines Ausgangsmaterials auf die Auflage (7), um die erste Vielzahl von Lichtleitfasern (2) und die zweite Vielzahl von Lichtleitfasern (2) zu beschichten und das Material auf Metall-, Polymer- oder Keramikbasis zu erhalten.
- entnehmen des Materials auf Metall-, Polymer- oder Keramikbasis aus der Werkzeugform.

10. Herstellungsverfahren nach Patentanspruch 9, **dadurch gekennzeichnet, dass** die Auflage (7) opferfähig ist.

11. Herstellungsverfahren nach Anspruch 10, **dadurch gekennzeichnet, dass** die Auflage (7) ein Opferharz ist, das als Klebstoff für die erste Vielzahl von Lichtleitfasern (2) und die zweite Vielzahl von Lichtleitfasern (2) während deren Positionierung dient.

12. Herstellungsverfahren nach Anspruch 9, **dadurch gekennzeichnet, dass** die Auflage (7) eine Platte ist, die mit einem oder mehreren Löchern für die Positionierung der ersten Vielzahl von Lichtleitfasern (2) und der zweiten Vielzahl von Lichtleitfasern (2) durchbohrt ist.

13. Herstellungsverfahren nach Anspruch 9, **dadurch gekennzeichnet, dass** die Lichtleitfasern in eine Polymermatrix eingebettet sind, wobei die besagte Polymermatrix aus Epoxid-, Acryl-, Phenol-, Esterund Polyurethanharzen ausgewählt werden muss.

14. Herstellungsverfahren nach einem der Ansprüche 9 bis 12, **dadurch gekennzeichnet, dass** das Ausgangsmaterial ein metallisches oder keramisches Ausgangsmaterial ist, das ein organisches Bindemittelsystem umfasst, wobei das Material durch Sintern des Ausgangsmaterials nach einem Entbinderungsschritt erhalten wird.

15. Herstellungsverfahren nach einem der Ansprüche 9 bis 14, **dadurch gekennzeichnet, dass** mehrere Lichtleitfasern (2) in jeder der besagten Mehrheiten vorgesehen sind, wobei die besagten Lichtleitfasern (2) verdrillt und miteinander verklebt werden, nachdem die Lichtleitfasern (2) positioniert worden sind, um einen oder mehrere Stränge von Lichtleitfasern (2) zu bilden.

16. Herstellungsverfahren nach Anspruch 15, **dadurch gekennzeichnet, dass** jeder Strang von Lichtleitfasern (2) nach der Entnahme aus der Werkzeugform mit einer Lichtquelle (4) verbunden wird.

## Claims

1. A decorative part (1) comprising:
- an element (3) made at least partly of a metallic-, polymeric- or ceramic-based material and comprising a face (3a) visible to an observer (5),
- at least one light source (4) external or internal to said element (3), said decorative part (1) further comprising at least a first plurality of optical fibres (2) and a second plurality of optical fibres, each of the first and second pluralities of optical fibres being embedded in said material of the element (3), said optical fibres (2) in the first and second pluralities of optical fibres serving as a guide for the light from the light source (4) in order to produce, when in use, a luminous effect on the visible face (3a) of the element (3), the first and second pluralities of optical fibres having respectively different orientations, and in which each of the first and second pluralities of optical fibres respectively produces a differently-shaped luminous effect on the visible face, the element (3) being an external horology part chosen from the list including a middle, a back, a bezel, a push button, a dial and a dial index.

2. The decorative part (1) according to claim 1, **characterised in that** said first or second plurality of optical fibres (2) emerges at one end onto the visible face (3a) or in proximity to the visible face (3a) of the element (3) and at its other end onto a face (3c) flush with the visible face (3a).

3. The decorative part (1) according to claim 1, **characterised in that** said first and second plurality of optical fibres (2) emerges at one end onto the visible face (3a) or in proximity to the visible face (3a) of the element (3) and at their other ends onto a face (3b) opposite the visible face (3a).

4. The decorative part (1) according to any of claims 1 to 3, **characterised in that** the other ends of the first and second pluralities of optical fibres (2) are directly connected to the light source (4).

5. The decorative part (1) according to any of claims 1 to 3, **characterised in that** the other ends of the first and second pluralities of optical fibres (2) are coupled to the light source (4) via a waveguide (10).

6. The decorative part (1) according to any of the preceding claims, **characterised in that** it comprises at least two light sources (4) intended when in use to respectively form decorations on the visible face (3a) of the element (3) that differ from each other in shape or in colour, respectively corresponding to the first and second pluralities of optical fibres.

7. The decorative part (1) according to any of the preceding claims, **characterised in that** the element (3) is a dial with the light source (4) arranged underneath the dial.

8. The decorative part (1) according to any of the preceding claims, **characterised in that** the element (3) is a dial with the light source (4) arranged facing a lateral face of the dial.

9. A method for manufacturing a decorative part (1) according to any of the preceding claims, the method comprising the steps consisting in:
- Providing a first plurality of optical fibres (2) and a second plurality of optical fibres (2) and a mould (8) having substantially the shape of the element (3),
- Placing, in the bottom of the mould, (8) a rest (7) for positioning the first plurality of optical fibres (2) and the second plurality of optical fibres (2),
- Pouring, injecting or pressing onto the rest (7) a starting material so as to coat the first plurality of optical fibres (2) and the second plurality of optical fibres (2) and to obtain the metallic-, polymeric- or ceramic-based material.
- Removing the metallic-, polymeric- or ceramic-based material from the mould.

10. The manufacturing method according to claim 9, **characterised in that** the rest (7) is sacrificial.

11. The manufacturing method according to claim 10, **characterised in that** the rest (7) is a sacrificial resin acting as an adhesive for the first plurality of optical fibres (2) and the second plurality of optical fibres (2) during their positioning.

12. The manufacturing method according to claim 9, **characterised in that** the rest (7) is a plate pierced with one or more holes for the positioning of the first plurality of optical fibres (2) and the second plurality of optical fibres (2).

13. The manufacturing method according to claim 9, **characterised in that** the optical fibres are embedded in a polymer matrix, said polymer matrix being chosen from among epoxy, acrylic, phenolic, ester and polyurethane resins.

14. The manufacturing method according to any of claims 9 to 12, **characterised in that** the starting material is a metallic or ceramic feedstock comprising an organic binder system, the material being obtained by sintering the feedstock after a debinding step.

15. The manufacturing method according to any of claims 9 to 14, **characterised in that** several optical fibres (2) are provided in each of said pluralities, said optical fibres (2) being twisted and glued to each other after the optical fibres (2) have been positioned in order to form one or more strands of optical fibres (2).

16. The manufacturing method according to claim 15, **characterised in that**, after it is removed from the mould, each strand of optical fibres (2) is connected to a light source (4).
